# EUROPÄISCHE PATENTSCHRIFT

(11) **EP 0 977 406 B1**
(45) Veröffentlichungstag und Bekanntmachung des Hinweises auf die Patenterteilung: **23.09.2009**
(21) Anmeldenummer: 99113684.7
(22) Anmeldetag: 15.07.1999
(51) Int. Cl.: H04L 25/02, H04L 5/16

(54) **Schaltungsanordnung zum galvanisch getrennten Übertragen von Digitalsignalen**
Circuit for transmission of galvanically isolated digital signals
Circuit de transmission de signaux numériques avec séparation galvanique

(30) Priorität: 17.07.1998 EP 98113334; 25.11.1998 US 109786 P
(43) Veröffentlichungstag der Anmeldung: 02.02.2000
(73) Patentinhaber: ENDRESS + HAUSER WETZER GmbH + Co. KG, D-87484 Nesselwang (DE)
(72) Erfinder: Konrad, Stephan, Dipl.-Ing., 87669 Rieden a.F. (DE)
(74) Vertreter: Andres, Angelika Maria

(56) Entgegenhaltungen:
- EP-A- 0 198 263
- WO-A-89/12366
- WO-A-98/37672
- DE-A- 2 555 045
- DE-A- 3 614 832
- DE-U- 29 514 238
- US-A- 5 384 808
- US-A- 5 418 933
- US-A- 5 627 480

## Beschreibung

Die Erfindung betrifft einen Übertragungskanal zum galvanisch getrennten Übertragen von Digitalsignalen.

Übertragungskanäle der beschriebenen Art werden häufig bei Übertragungen von Digitalsignalen mittels Signalübertragungsleitungen, insb. über große Entfernungen, eingesetzt und dienen dazu, die Potentiale zwischen Sende- und der Empfangs-Einheit eines Datenübertragungssystems zu trennen. Solche Potentialtrennungen sind erforderlich, um Störsignale aufgrund von Ausgleichsströmen in den Signalübertragungsleitungen zu unterdrücken.

Aufgrund ihres hohen Wirkungsgrades werden zur galvanischen Trennung oft Übertrager verwendet. Die Verwendung von Übertragern hat jedoch wegen der Wirkung von deren Induktivitäten stets eine Verringerung der Flankensteilheit des Digitalsignals zur Folge, was gegebenenfalls zur Untauglichkeit dieses Übertragungsverfahrens führt. Hinzu kommt, daß Übertrager elektromagnetisch in sie eingekoppelte Störsignale ebenfalls weiterleiten, so daß zu deren Unterdrückung ein erheblicher technischer Aufwand betrieben werden muß. In den DE-A 36 14 832, WO-A 89/12 366 und EP-A 198 263 ist jeweils ein Übertragungskanal zum Übertragen von Digitalsignalen
- mit einem ersten Digitalsignal-Anschluß für ein zu übertragendes erstes Digitalsignal und
- mit einem zweiten Digitalsignal-Anschluß für ein übertragenes zweites Digitalsignal,
   beschrieben, welcher Übertragungskanal umfaßt:
- eine galvanische Trennstrecke von vorgebbarer Isolierfähigkeit,
- eine erste Konvertierungsstufe
   -- mit einem Kopplungssignal-Anschluß für ein über die Trennstrecke hinweg übertragungsfähiges erstes Kopplungssignal sowie
- eine zweite Konvertierungsstufe
   -- mit einem Kopplungssignal-Anschluß für ein über die Trennstrecke (IP) hinweg übertragungsfähiges zweites Kopplungssignal,
- wobei die Trennstrecke zwischen einer Spule der ersten Konvertierungsstufe und einer Spule der zweiten Konvertierungsstufe ausgebildet ist und
- wobei die zweite Konvertierungsstufe das zweite Kopplungsignal in das zweite Digitalsignal mittels einer bistabilen Kippschaltung überführt,
   -- von der ein Setz-Eingang mit dem zweiten Kopplungssignal-Anschluß und
   -- von der ein Ausgang mit dem zweiten Digitalsignal-Anschluß gekoppelt sind.

Für den Fall, das Signale zwischen zwei Sende-/Empfangseinheiten übertragen werden sollen, müssen derartige galvanisch-trennende Schaltungsanordnungen auch bidirektional, d.h. in einer ersten und in einer zweiten Übertragungsrichtung, betrieben werden können. Dies ist mit den in den beschriebenen Übertragungskanälen jedoch nicht möglich.

Als nachteilig bei der Verwendung von bistabilen Kippschaltungen in derartigen Übertragungskanälen erweist sich desweiteren, daß deren Einschaitzustand nicht definiert ist.

Der Erfindung liegt daher die Aufgabe zugrunde, einen Übertragungskanal zur galvanisch getrennten Übertragung von Digitalsignalen mittels Übertrager anzugeben, bei dem die Übertragungsrichtung im Betrieb veränderbar ist.

Eine weitere Aufgabe der Erfindung besteht darin, eine Schaltungsanordnung für die galvanisch getrennte Übertragung von Digitalsignalen mittels eines Übertragers anzugeben, die vor und nach der Übertragung eines Digitalsignals stets in einem eindeutigen, statischen Zustand verharrt. Ferner soll das mittels dieser Schaltungsanordnung übertragene Digitalsignal eine hinreichend große Flankensteilheit aufweisen.

Zur Lösung dieser Aufgabe besteht die Erfindung in einem Übertragungskanal gemäss den Ansprüchen 1 bis 8.

Ein Vorteil der Erfindung besteht darin, daß die Flankensteilheit der übertragenen Digitalsignale nicht verringert wird. Das heißt, daß die am Ausgang der Schaltungsanordnung auftretenden Digitalsignale die gleiche Flankensteilheit wie die an den Eingang angelegten aufweisen.

Ein weiterer Vorteil der Erfindung besteht darin, das die Schaltungsanordnung aufgrund des Bezugspotentials an der jeweilige Schaltstufe einen definierten Ruhepegel aufweist, der nach jeder Signal-Übertragung stets wieder eingenommen wird.

Die Erfindung und weitere Vorteile werden nun anhand von Ausführungsbeispielen, das in den Figuren der Zeichnung dargestellt ist, näher erläutert; gleiche Teile sind in den Figuren mit gleichen Bezugszeichen versehen.
- Fig. 1: zeigt schematisch einen Übertragungskanals für eine galvanisch getrennte Übertragung von Digitalsignalen,
- Fig. 2: zeigt schematisch ein Schaltbild des Übertragungskanals von Fig. 1 mit einer monostabilen Kippschaltung,
- Fig. 3a bis d und Fig. 4a bis f: zeigen beispielhaft zeitliche Verläufe von verschiedenen Potentialen, die beim Betrieb des Übertragungskanals von Fig. 2 auftreten,
- Fig. 5: zeigt schematisch einen Übertragungskanals für eine galvanisch getrennte, bidirektionale Übertragung von Digitalsignalen,
- Fig. 6: zeigt schematisch ein Schaltbild einer bidirektionalen Treiberschaltung für den Übertragungskanal in Fig. 5,
- Fig. 7: zeigt schematisch ein Schaltbild einer anderen bidirektionalen Treiberschaltung für den Übertragungskanal in Fig. 5.
- Fig. 8: zeigt schematisch ein Schaltbild einer weiteren bidirektionalen Treiberschaltung für den Übertragungskanal in Fig. 5.

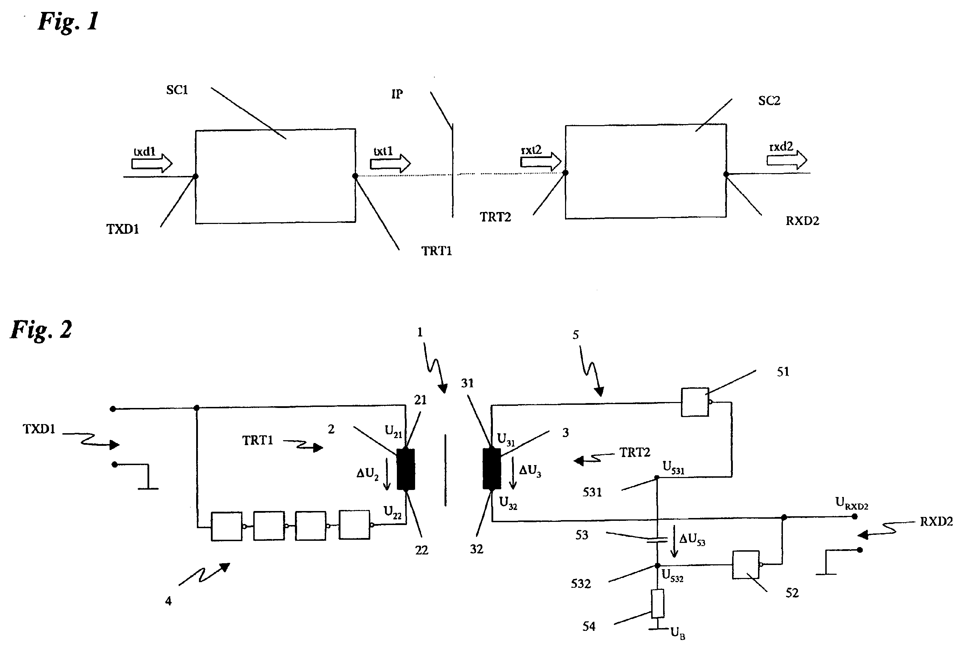

In Fig. 1 ist schematisch nach der Art eines Blockschaltbildes ein Übertragungskanal zum galvanisch getrennten Übertragen von Digitalsignalen, insb. von Binärsignalen, zwischen einer nicht dargestellten ersten und einer nicht dargestellten zweiten Sende-Empfangseinheit in einer eingestellten Übertragungsrichtung gezeigt. Als Digitalsignal kann dabei jedes zweiwertige elektrische Signal von vorgebbarer Pulsbreite und Pulsfrequenz und von vorgebbarem Puls-zu-Pausen-Verhältnis dienen.

Der Übertragungskanal umfaßt einen ersten Digitalsignal-Anschluß TXD1 für ein zu übertragendes erstes Digitalsignal txd1 und einen zweiten Digitalsignal-Anschluß RXD2 für ein übertragenes zweites Digitalsignal rxd2.

Ferner umfaßt der Übertragungskanal eine erste Konvertierungsstufe SC1 mit einem Kopplungssignal-Anschluß TRT1, eine zweite Konvertierungsstufe SC2 mit einem Kopplungssignal-Anschluß TRT2 sowie eine den Kopplungssignal-Anschlüssen TRT1, TRT2 zwischengekoppelte galvanische Trennstrecke IP von vorgebbarer Isolierfähigkeit. Die Isolierfähigkeit der Trennstrecke IP leitet sich sowohl aus deren Spannungsfestigkeit als auch aus deren Stromleitfähigkeit ab. Sie ist umso höher, je höher die Spannungsfestigkeit und/oder je niedriger die Stromleitfähigkeit ist.

Die Konvertierungsstufe SC1 dient dazu, das am Digitalsignal-Anschluß TXD1 angelegte Digitalsignal txd1 in ein über die Trennstrecke IP hinweg übertragungsfähiges, erstes Kopplungsignal txt1 am Kopplungssignal-Anschluß TRT1 umzuwandeln. Demgegenüber dient die Konvertierungsstufe SC2 dazu, ein am Kopplungssignal-Anschluß TRT2 angelegtes, über die Trennstrecke IP hinweg übertragenes zweites Kopplungssignal rxt2 in das am Digitalsignal-Anschluß RXD2 anliegende Digitalsignal rxd2 umzuwandeln.

In entsprechender Weise dient die galvanische Trennstrecke IP einerseits dazu, das Kopplungssignal txt1 am Kopplunssignal-Anschluß TRT1 in das Kopplungssignal rxt2 am Kopplunssignal-Anschluß TRT2 zu überführen. Andererseits dient sie aber auch dazu, das Einkoppeln von Störsignalen, z.B. aufgrund von entlang des Übertragungskanals auftretenden Potentialunterschieden, in das Kopplungssignal rxt2 und damit in das Digitalsignal rxd2 zu unterdrücken.

Nach einem bevorzugten Ausführungsbeispiel gemäß Fig. 2 ist die galvanische Trennstrecke IP durch einen zwischen einer als eine erste Übertrager-Wicklung dienenden Spule 2 der Konvertierungsstufe SC1 und einer als eine zweite Übertrager-Wicklung dienenden Spule 3 der Konvertierungsstufe SC2 ausgebildeten Übertrager-Luftspalt realisiert; falls erforderlich, kann sie z.B. auch mittels einer Übertrager-Trennstrecke eines in Isoliermaterial eingebetten Übertragers und/oder auch mittels meherer aufeinanderfolgenden Übertrager-Trennstrecken von parallelgeschalteten Übertragern realisiert sein.

Die Spule 2 liegt mit einem ersten Spulen-Anschluß 21 auf einem ersten Potential U₂₁ und mit einem zweiten Spulen-Anschluß 22 auf einem zweiten Potential U₂₂ während die Spule 3 mit einem ersten Spulen-Anschluß 31 auf einem dritten Potential U₃₁ und mit einem zweiten Spulen-Anschluß 32 auf einem vierten Potential U₃₂ liegt. Beide Spulen 2, 3 sind so zueinander angeordnet, daß im Betrieb des Übertragungskanals ein in einer der Spulen 2, 3 erzeugtes magnetisches Streufeld in die jeweils andere Spule 3 bzw. 2 eingekoppelt wird. Als Kopplungssignale txt1, txt2 können somit zeitlich veränderliche, insb. impuslförmige, Strom- oder Spannungssignale dienen, vgl. die DE-A 36 14 832, WO-A 89/12 366 und EP-A 198 263.

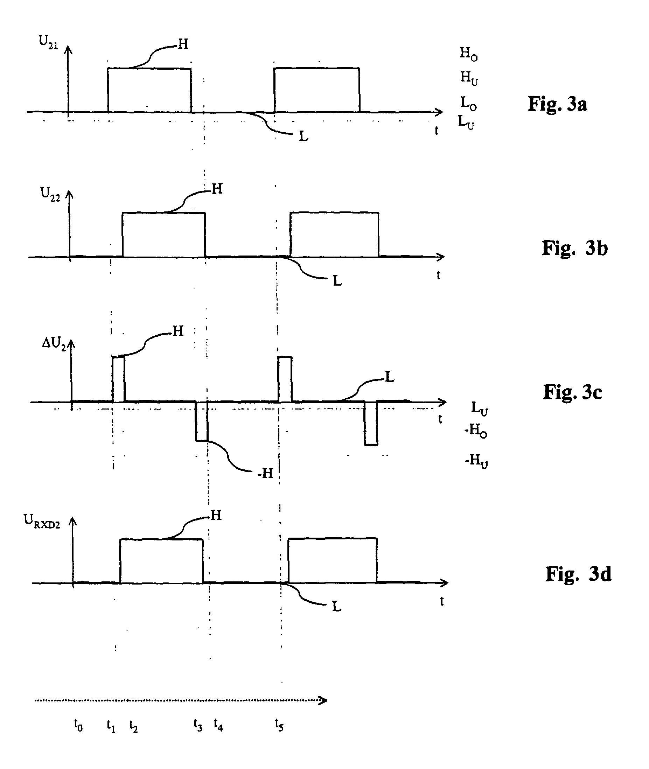

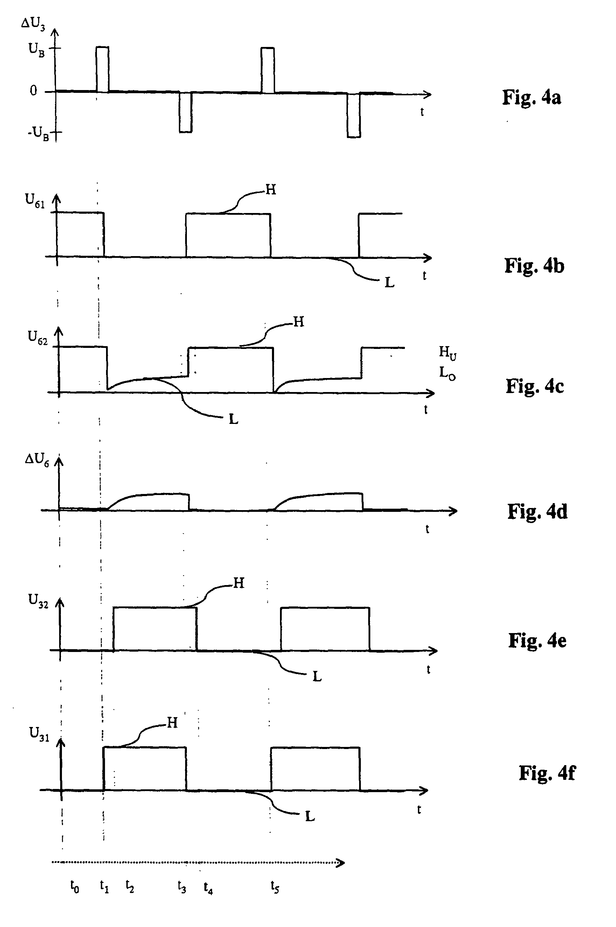

Die Potentiale U₂₁, U₂₂, U₃₁, U₃₂ weisen im Betrieb des Übertragungskanals bei Einspeisung des Digitalsignals txd1 jeweils Werte auf, die, wie in den Fig. 3a, 3b, 4e und 4f dargestellt, einem ersten logischem Signalzustand H (high) und einen zweiten logischem Signalzustand L (low) zugeordnet sind. Unter dem Signalzustand H wird hier ein erster Wertebereich von Potentialen bzw. Spannungen verstanden, der eine erste obere Bereichsgrenze Hₒ und eine erste untere Bereichsgrenzegrenze Hᵤ aufweist. Unter dem Signalzustand L wird demgegenüber ein zweiter Wertebereich von Potentialen bzw. Spannungen verstanden, der eine zweite obere Bereichsgrenze Lₒ und eine zweite untere Bereichsgrenze Lᵤ aufweist. Beide Wertebereiche überlappen sich nicht, d.h. die erste unter Bereichsgrenze Hᵤ ist größer als die zweite obere Bereichsgrenze Lₒ.

Nach einer Ausgestaltung der Erfindung dient als Kopplungssignal txt1 eine erste Spannung ΔU₂, die im Betrieb die Signalzuständen H oder L oder einen dritten logischen Signalzustand -H mit einer oberen Wertebereichsgrenze -Hₒ, die niedriger als die Wertebereichsgrenze Lᵤ ist, und mit und einer unteren Wertebereichsgrenze -Hᵤ einnimmt, vgl. Fig. 3c.

Diese logisch-dreiwertige Spannung ΔU₂ von vorgebbarer Pulsbreite wird mittels der Konvertierungsstufe SC1 dadurch erzeugt, daß im Betrieb das Potential U₂₁ aufgrund des direkt angelegte Digitalsignal txd1 und das Potential U₂₂ aufgrund eines vom Digitalsignal txd1 abgeleiteten und gegenüber letzteren phasenverschobenen Digitalsignals zeitlich verändert werden. Zur Phasenverschiebung wird das Digitalsignal txd1 auch einem Eingang einer nichtinvertierenden Verzögerungsschaltung 4 mit vorgebbarer Signallaufzeit zugeführt und an einem mit dem Spulen-Anschluß 22 verbundenen Ausgang der Verzögerungsschaltung 4 angelegt, woraufhin sich die Spannung ΔU₂ als eine Differenz U₂₁ - U₂₂ der beiden zeitlich veränderlichen und gegeneinander phasenverschobenen Potentiale U₂₁, U₂₂ ergibt, vgl. 3c. Mögliche zeitliche Verläufe der Potentiale U₂₁, U₂₂ sind in 3a und 3b gezeigt, die der Einfachheit halber Rechtecksignalen mit einem Puls-zu-Pausen-Verhältnis von eins entsprechen.

Als Verzögerungsschaltung 4 der Konvertierungsstufe SC1 kann praktisch jede, z.B. mittels logischer Gatter, kaskadierter Inverter oder nicht-invertierender Operationsverstärker realisierte Laufzeitkette von vorgebbarer Verstärkung und von vorgebbarer Signallaufzeit dienen. Die Verstärkung der Laufzeitkette ist dabei so zu wählen, daß die Spannung ΔU₂ für den Fall U₂₁ gleich H und U₂₂ gleich H einen Wert einnimmt, der mindestens gleich der unteren Bereichsgrenze Lᵤ und der höchstens gleich der oberen Bereichsgrenze Lₒ des Signalzustandes L ist.

Bei der Einspeisung des Digitalsignals txd1 mit einem resultierenden Potentialverlauf gemäß Fig. 3a bzw. 3b ergibt sich bei einer Verstärkung der Laufzeitkette von eins ferner der in Fig. 3c dargestellte zeitliche Verlauf der dem Kopplungssignals txt1 entsprechenden Spannung ΔU₂.

Die Signallaufzeit der Verzögerungsschaltung 4 ist stets so zu wählen, daß einerseits die Pulsbreite der Spannung ΔU₂ einem sicheren Schalten der mit dem Kopplungssignal rxt2 beaufschlagten nachfolgenden Konvertierungsstufe SC2 genügt und andererseits das Signal-Potential U₂₂ um weniger als eine kleinste zu erwartende Pulsbreite des zu übertragenden Digitalsignals txd1, z.B. um 100 ns, gegenüber dem Signal-Potential U₂₁ phasenverschoben ist.

Die als Kopplungssignal txt1 dienende Spannung ΔU₂ wird ohne Gleichanteil von der Spule 2 auf die Spule 3 übertragen und erscheint dort inform einer Spannung ΔU₃ als ebenfalls dreiwertiges Kopplungssignal rxt2.

Da die zeitlichen Verläufe der Potentiale U₂₁, U₂₂ an beiden primärseitigen Spulen-Anschlüssen 21 bzw. 22 für alle hinter der Verzögerungsstufe der Konvertierungsstufe SC1 in den Übertragungskanal eingekoppelten Störsignale gleich sind, ist eine Störpotentialdifferenz ΔU₂* eines allfälligen Störsignals gleich null und somit auch eine Übertragung deselben unterdrückt.

Zum Umwandeln des Kopplungssignals rxt2 in das Digitalsignal rxd2 umfaßt die Konvertierungsstufe SC2 eine monostabile Kippschaltung 5 mit einem Setz-Eingang, der an den Spulen-Anschluß 31 gekoppelt ist, und mit einem an den Digitalsignal-Anschluß RXD2 gekoppelten nichtinvertierenden Ausgang; der Digitalsignal-Anschluß RXD2 kann aber auch mittels eines invertierenden Ausgang der Kippschaltung 5 und einem ggf. nachgeschalteten weiteren Inverter gebildet sein. Monostabile Kippschaltungen nehmen bekanntlich im Betrieb am Ausgang nur entweder den Signalzustand H oder den Signalzustand L stabil an. Der jeweils andere Signalzustand wird vom Ausgang der Kippschaltung demgegenüber nur temporär angekommen; nach dem Ablauf einer einstellbaren Einschaltzeit geht der Ausgang wieder in den stabilen Schaltzustand über.

Diese monostabile Kippschaltung 5 dient dazu, bei einer einer positiven Flanke des Digitalsignals txd1 entsprechenden positiven Flanke des Kopplungssignals rxt2 ein Potential U_{RXD2} am Digitalsignal-Anschluß RXD2 auf den Signalzustand H und bei einer einer negativen Flanke des Digitalsignals txd1 entsprechenden negativen Flanke des Kopplungssignals rxt2 das Potential U_{RXD2} auf einen Signalzustand L zu setzen; als positive Flanken gelten Potentialwechsel von einem Signalzustand auf einen im Vergleich dazu höheren Signalzustand, z.B. der Potentialwechsel vom Signalzustand L nach H oder der vom Signalzustand -H nach L; in entsprechender Weise gelten als negative Flanken Potentialwechsel von einem Signalzustand auf einen im Vergleich dazu niedrigeren Signalzustand, z.B. der Potentialwechsel vom Signalzustand H nach L oder der vom Signalzustand L nach -H.

Der zeitliche Verlauf des Potentials U_{RXD2} entspricht dann, abzüglich einer geringen laufzeitbedingten Phasenverschiebung und einer ggf. vorhandenen Vertauschung des Vorzeichens, dem des Digitalssignals txd1 und somit einer Abbildung des Digitalssignals txd1 auf das Digitalsignal rxd2.

Nach einer bevorzugten Ausgestaltung der Erfindung umfaßt die monostabile Kippschaltung 5 gemäß Fig. 2 einen ersten Inverter 51, mit einem an den Spulen-Anschluß 31 gekoppelten Eingang, einen zweiten Inverter 52 mit einem an den Spulen-Anschluß 32 gekoppelten Ausgang, einen Kondensators 53 mit einem an einen Ausgang des Inverters 51 gekoppelten, ersten Kondensator-Anschluß 531 und mit einem an einen Eingang des Inverters 52 gekoppelten, zweiten Kondensator-Anschluß 532 sowie einen ohmschen Widerstand 54 mit einem, ebenfalls an den Eingang des Inverters 52 gekoppelten ersten Widerstands-Anschluß und mit einem zweiten Widerstands-Anschluß auf einem festen Bezugspotential U_{B}, dessen Wert dem Signalzustand H entspricht.

Der Eingang des Inverters 51 dient somit als Setz-Eingang der Kippschaltung 5, während dessen Ausgang als invertierender bzw. der Ausgang des Inverters 52 als nicht-invertierender Ausgang der Kippschaltung 5 dient.

Der Kondensator 53 wirkt in Verbindung mit dem Widerstand 54 als eine Speicherschaltung. Diese Speicherschaltung dient dazu, bei einer negative Flanke an einem Speicher-Eingang der Speicherschaltung einem Potential an einem Speicher-Ausgang der Speicherschaltung den Signalzustand L zuzuweisen und diesen temporär aufrecht zu erhalten. Ferner dient die Speicherschaltung dazu, bei einer positiven Flanke am Speicher-Eingang dem Potential am Speicher-Ausgang den Signalzustand H zuzuweisen. Mittels dieser Speicherschaltung ist somit eine Einschaltdauer der Kippschaltung 5 einstellbar, welche Einschaltdauer gleich einer Pulsbreite eines Signalzustandes H am nicht-invertierenden Ausgang der Kippschaltung 5 ist.

Der Speicher-Eingang entspricht beim Ausführungsbeispiel gemäß der Fig. 2 dem Kondensator-Anschluß 531 während der Speicher-Ausgang dem Kondensator-Anschluß 532 entspricht. Eine zu einer maximalen Einschaltdauer proportionale, sich als Produkt aus Kapazität C und Widerstandswert R ergebende Zeitkonstante T ist so zu wählen, daß diese maximale Einschaltdauer ca. fünfmal größer als eine größte zu erwartenden Pulsbreite des Digitalsignals txd1 ist; sie muß jedoch mindestens gleich der zu erwartenden Pulsbreite sein. Für das Ausführungsbeispiel gemäß Fig. 2 ergibt sich bei einer größten Pulsbreite von 1 ms und einem Widerstandswert R von z.B. 47 kΩ eine Kapazität C von ca. 100 nF.

Der weiteren Erläuterung der Funktionsweise der monostabilen Kippschaltung 5 dienen die Fig. 4a bis f.

In einem ersten statischen Schaltzustand von einem Zeitpunkt t₀ bis zu einem Zeitpunkt t₁ wird kein Digitalsignal txd1 übertragen. Dementsprechend haben beide Spulen-Anschlüsse 31, 32 den Signalzustand L angenommen und ist die Spannung ΔU₃ gleich null, vgl. die Fig. 4a, e und f.

In entsprechender Weise liegen beide Kondensator-Anschlüsse 531, 532 auf dem Bezugspotential U_{B}, und beide verharren somit, wie in den Fig. 4b und c gezeigt, im ersten Signalzustand H. Eine, sich als Differenz zwischen einem Kondensator-Potential U₅₃₁ am Kondensator-Anschluß 531 und einem Kondensator-Potential U₅₃₂ am Kondensator-Anschluß 532 ergebende Kondensator-Spannung ΔU₅₃, ist daher ebenfalls gleich null, vgl. Fig. 4d. Der Kondensator 53 ist folglich entladen.

Durch Anlegen des zu übertragenden Digitalsignals txd1 mit einer positiven Flanke zu einem Zeitpunkt t₁ gemäß Fig. 3a erfolgt am Spulen-Anschluß 31 ein Wechsel des Potential U₃₁ von null auf einen höheren, dem ersten Signalzustand H entsprechenden Wert.

Dadurch wird das Kondensator-Potential U₅₃₁, um eine Signallaufzeit durch den Inverter 51 gegenüber der positiven Flanke verzögert, auf einen Wert für den Signalzustand L gesetzt. Wegen der integrierenden Wirkung des Kondensators 53 bezüglich der Kondensator-Spannung ΔU₅₃ nimmt der Kondensator-Anschluß 532 ebenfalls sofort das Kondensator-Potential U₅₃₂ gleich null an. Wiederum entsprechend laufzeitverzögert wechselt der Ausgang des Inverters 52 auf den Signalzustand H. Die Kippschaltung 5 befindet sich nun in einem zweiten Schaltzustand, welcher vom Zeitpunkt t₁ bis zu einem Zeitpunkt t₂ andauert.

Der Kondensator 53 wird während der Dauer des zweiten Schaltzustands, bestimmt durch die Zeitkonstante T, langsam nach einer e-Funktion aufgeladen, was dazu führt, daß das Kondensator-Potential U₅₃₂ wieder gegen das Bezugspotential U_{B} strebt. Je größer die Zeitkonstante T gewählt worden ist, desto langsamer erfolgt die Aufladung des Kondensators 53 und damit auch die Erhöhung des Kondensator-Potentials U₅₃₂.

Gemäß der vorgegebenen Signallaufzeit der Verzögerungsschaltung 4 der Konvertierungsstufe SC1 ist die Spannung ΔU₂ über den beiden Spulen-Anschlüssen 21, 22 nur kurzzeitig ungleich null. Beim Wechsel der Spannung ΔU₂ auf null zum Zeitpunkt t₂ wird das Potential U₃₁ am Spulen-Anschluß 31 auf dem Wert des Potentials U₃₂ am Spulen-Anschluß 32 gehalten; welches aufgrund der langsamen Aufladung des Kondensators 53 immer noch den Signalzustand H einnimmt.

Somit verbleibt auch am Kondensator-Anschluß 531 der Signalzustand L erhalten, und der Kondensator 53 wird entsprechend weiter aufgeladen. Die Kondensator-Spannung ΔU₅₃ strebt ebenfalls nach der oben beschriebenen *e*-Funktion einem Wert zu, der dem Bezugspotential U_{B} entspricht. Die Kippschaltung 5 befindet sich vom Zeitpunkt t₂ bis zu einem Zeitpunkt t₃ in einem dritten Schaltzustand. Die Zeit zwischen den Zeitpunkten t₁ und t₃ entspricht der Einschaltdauer oder auch Einschaltzeit der monostabilen Kippschaltung 5.

Nach einer der Pulsbreite des zu übertragenden Digitalsignals entsprechenden Zeit wechselt das Potenial U₃₁ am Spulen-Anschluß 31 zum Zeitpunkt t₃ vom Signalzustand H auf einen dem Signalzustand L entsprechenden niedrigeren Wert und dementsprechend das Kondensator-Potential U₅₃₁ auf das Bezugspotential U_{B} für den ersten Signalzustand H.

Ein momentaner Unterschied zwischen dem Kondensator-Potential U₅₃₁ und dem Kondensator-Potential U₅₃₂ wird wiederum praktisch unverzögert ausgeglichen, so daß auch der Eingang des zweiten Inverters 52 sofort das Bezugspotential U_{B} übernimmt und der Kondensator 53 dementsprechend wieder entladen ist. Die Kippschaltung 5 nimmt damit vom Zeitpunkt t₃ bis zu einem Zeitpunkt t₄ einen vierten Schaltzustand ein.

Beim anschließenden Wechsel der Spannung ΔU₂ vom Wert für den Signalzustand H auf null geht die Kippschaltung zum Zeitpunkt t₄ in einen fünften Schaltzustand über, der bis zu einem Zeitpunkt t₅ andauert. Der Spulen-Anschluß 31 übernimmt während des fünften Schaltzustands in Analogie zum dritten Schaltzustand wiederum das aktuelle Potential U₃₂ des Spulen-Anschlusses 32, das gleich dem Bezugspotential U_{B} ist.

Die zeitlichen Verläufe der an den Ausgängen der Inverter 51, 52 sowie am Eingang des Inverters 51 auftretenden Potentiale U₅₃₁, U₃₂ bzw. U₃₁ stimmen in ihrem Verlauf hinsichtlich der Reihenfolge und der zeitlichen Abstände der positiven und negativen Flanken mit dem des zu übertragenden Digitalsignal txd1 überein, wobei das Potential U₅₃₁ am Ausgang des Inverters 51 den Verlauf des Digitalsignal txd1 mit umgekehrten Vorzeichen widergibt, also praktisch einem Digitalsignal -rxd1 entspricht, das durch nachträgliches Invertieren ohne weiteres in das Digitalsignal rxd1 überführt werden kann.

Aufgrund dessen, daß der Digitalsignal-Anschluß RXD2 nur einen stabilen Signalzustand annehmen kann, geht der Übertragungskanal nach dem Beenden bzw. nach einem fehlerbedingten Abbruch der Signalübertragung in einen definierten Ausgangs- oder auch Ruhezustand über.

Gemäß der Fig. 2 sind der Spulen-Anschluß 21 mit dem Digitalsignal-Anschluß TXD1 und der Spulen-Anschluß 31 mit dem Digitalsignal-Anschluß RXD2 praktisch direkt verbunden. Für den Fall, daß der Setz-Eingang der Kippschaltung 5 an den Spulen-Anschluß 32 und dementsprechend der nicht-invertierenden Ausgang der Kippschaltung 5 an den Spulen-Anschluß 31 gekoppelt sind, ergibt sich eine zusätzliche Phasenverschiebung des Digitalsignals rxd2 gegenüber dem Digitalsignal txd1, die darauf zurückzuführen ist, daß anstelle der den Flanken des Digitalsignals txd1 entsprechenden Flanken des Kopplungssignals rxt2 nunmehr nur die den jeweiligen Flanken des Digitalsignals ausgangs der Verzögerungsschaltung 4 entsprechenden Flanken des Kopplungssignals rxt2 die Kippschaltung 5 anstoßen bzw. zurücksetzen.

Für die Verzögerungsschaltung 4 ist ferner sicherzustellen, daß deren Signallaufzeit mindestens gleich einer Verzögerungszeit ist, mit der eine Änderung des Potentials U₃₁ am Setz-Eingang der Kippschaltung 5 eine Änderung des Potentials U₃₂ bewirkt.

Die geforderte Güte der galvanischen Trennung des Übertragungskanals wird im wesentlichen durch die bauliche Ausführung des Übertragers bestimmt und kann somit einfach und über einen großen Anwendungsbereich gewährleistet werden. Ein weiterer Vorteil ist, daß auf Spezialbauelemente verzichtet werden kann, wodurch eine entsprechend hohe Zuverlässigkeit des Übertragungskanals bei geringen Kosten ermöglicht wird. Der Übertragungskanal besitzt zudem eine hohe Übertragungssicherheit.
Nach einer zweiten Variante der Erfindung dient der Übertragungskanal dazu, Digitalsignale, z.B. zum Zwecke des Datenaustausches, zwischen einer nicht dargestellten ersten und einer nicht dargestellten zweiten Sende-Empfangseinheit in einer im Betrieb einstellbaren ersten Übertragungsrichtung oder in einer im Betrieb einstellbaren zweiten Richtung galvanisch getrennt zu übertragen. Als Digitalsignal kann wiederum jedes zweiwertige elektrische Signal von vorgebbarer Pulsbreite und Pulsfrequenz und von vorgebbarem Puls-zu-Pausen-Verhältnis dienen.

Da der Übertragungkanal für das Übertragen der Digitalsignale bidirektional im Halb-Duplex-Betrieb arbeitet, also so betrieben wird, daß gleichzeitig immer nur genau eine der Übertragungsrichtungen eingestellt ist, kann er z.B. zur Realisierung potentialgetrennter serieller Schnittstellen von Mikroprozessorsystemen oder Modems verwendet werden.

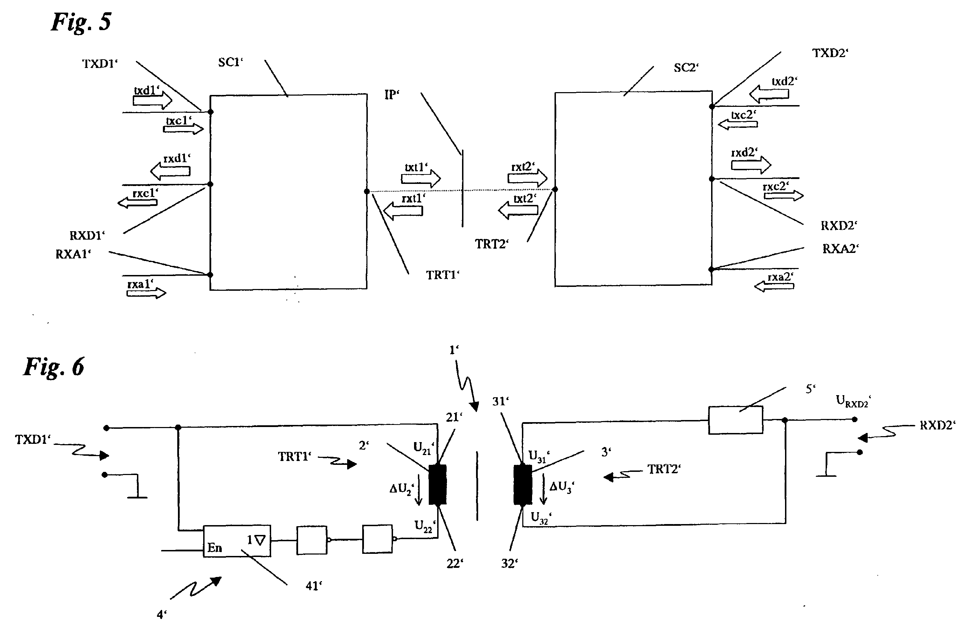

Gemäß Fig. 5 umfaßt der Übertragungskanal zum bidirektionalen Übertragen der Digitalsignale im Halb-Duplex-Betrieb einen ersten deaktivierbaren Digitalsignal-Anschluß TXD1' für ein zu übertragendes erstes Digitalsignal txd1', einen zweiten deaktivierbaren Digitalsignal-Anschluß RXD2' für ein übertragenes zweites Digitalsignal rxd2', einen dritten deaktivierbaren Digitalsignal-Anschluß TXD2' für ein zu übertragendes drittes Digitalsignal txd2' sowie einen vierten deaktivierbaren Digitalsignal-Anschluß RXD1' für ein übertragenes viertes Digitalsignal rxd1'. Deaktivierbar bedeutet, daß der jeweilige Digitalsignal-Anschluß im Betrieb mittels entsprechender Steuersignale neben einem aktiven, signalleitenden Zustand auch einen inaktiven, signallsperrenden Zustand einnehmen kann.

Des weiteren umfaßt der Übertragungskanal einen ersten Stellsignal-Anschluß RXA1' für ein zur Aktivierung oder Deaktivierung der Digitalsignal-Anschlüsse TXD1', RXD1' dienendes binäres erstes Stellsignal rxa1' sowie einen zweiten Stellsignal-Anschluß RXA2' für ein der Aktivierung oder der Deaktivierung der Digitalsignal-Anschlüsse TXD2', RXD2' dienendes binäres zweites Stellsignal rxa2'.

Die erste Übertragungsrichtung des Übertragungskanals wird bei der zweiten Variante der Erfindung dadurch eingestellt, daß die beiden Digitalsignal-Anschlüsse TXD1', RXD2' aktiviert und die beiden Digitalsignal-Anschlüsse RXD1', TXD2' deaktiviert sind. Dementsprechend wird die zweite Übertragungsrichtung dadurch eingestellt, daß die Digitalsignal-Anschlüsse TXD2', RXD1' aktiviert und die Digitalsignal-Anschlüsse RXD2', TXD1' deaktiviert sind. Deaktiviert bedeutet dabei, daß der jeweilge Digitalsignal-Anschluß signalsperrend wirkt und ein diesem zugeführtes Digitalsignal an nachfolgende Schaltungskomponenten des Übertragungskanals bzw. an die angeschlossenen Sende-Empfangseinheit nicht weitergeleitet wird; aktiviert heißt dementsprechend, daß an den jeweiligen Digitalsignal-Anschluß angelegte Signale weitergeleitet wird. Als aktivierbare und deaktivierbare Digitalsignal-Anschlüsse TXD1', RXD2', TXD2', RXD1' können alle dem Fachmann bekannten Schaltungen dienen, die im Betrieb mittels entsprechender Steuersignale in einen signalleitenden und in einen signalsperrenden Zustand versetzt werden können, wie z.B. mit offene Kollektor-Ausgängen oder mit Tristate-Buffer realiserte Treiberschaltungen.

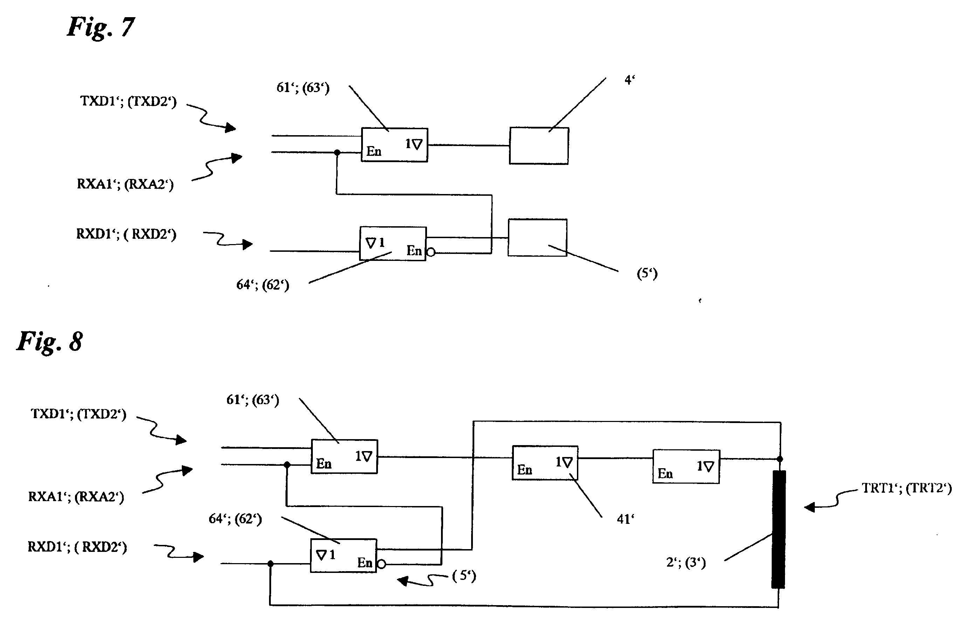

Nach einer bevorzugten Ausgestaltung der Erfindung umfaßt der Übertragungskanal zur Realisierung der deaktivierbaren Digitalsignal-Anschlüsse, wie in Fig. 7 dargestellt, einen ersten Tristate-Buffer 61', einen zweiten Tristate-Buffer 62', einen dritten Tristate-Buffer 63' sowie einen vierten Tristate-Buffer 64'. Tristate-Buffer sind bekanntlich Schaltungselemente, bei denen im Betrieb mittels eines binären Stellsignals an einem zusätzlichen Stelleingang En ein hochohmiger, signalsperrender Tristate-Buffer-Zustand oder ein niederohmiger, signalleitender Tristate-Buffer-Zustand sehr schnell einstellbar sind. Somit bewirkt nur bei eingestelltem aktiven Tristate-Buffer-Zustand eine Änderung eines eingangsseitig am Tristate-Buffer angelegten Signal-Potential eine entsprechende Änderung eines ausgangsseits des Buffers anliegenden Signal-Potentials; bei eingestelltem inaktiven Tristate-Buffer-Zustand bleibt dementsprechend das ausgangsseits anliegende Signal-Potential vom eingangseitigen Signal-Potential unbeeinflußt. Tristate-Buffer der beschriebenen Art können sowohl invertierende als auch nicht-invertierende Schaltungselemente sein.

Gemäß Fig. 7 dienen ein Buffer-Eingang des Buffers 61' als Digitalsignal-Anschluß TXD1' und ein Buffer-Ausgang des Buffers 62' als Digitalsignal-Anschluß RXD2' sowie ein Buffer-Eingang des Buffers 63' als Digitalsignal-Anschluß TXD2' bzw. ein Buffer-Ausgang des Buffers 64' als Digitalsignal-Anschluß RXD1'. Ferner sind in dem Ausführungsbeispiel gemäß der Fig. 7 die Stellsignal-Anschlüsse RXA1', RXA2' durch einen mit einem invertierenden Stellsignal-Anschluß des Buffers 62' gekoppelten nicht-invertierenden Stellsignal-Anschluß des Buffers 61' bzw. durch einen mit einem invertierenden Steuersignal-Anschluß des Buffers 64' gekoppelten nicht-invertierenden Stellsignal-Anschluß des Buffers 63' realisiert. Die Stellsignale rxa1', rxa2' sind für das Einstellen der ersten oder der zweiten Übertragungsrichtung so auszubilden, daß im Betrieb des Übertragungskanals bei eingestellter erster Übertragungsrichtung die Tristate-Buffer 63' und 64' sowie bei eingestellter zweiter Übertragungsrichtung die Tristate-Buffer 61' und 62' hochohmig, also signalsperrend, sind.

Zur Übertragung der Digitalsignale txd1', txd2' umfaßt der Übertragungskanal gemäß Fig. 5 ferner eine erste Konvertierungsstufe SC1' mit einem Kopplungssignal-Anschluß TRT1' und eine eine zweite Konvertierungsstufe SC2' mit einem Kopplungssignal-Anschluß TRT2' sowie eine einzige, den Kopplungssignal-Anschlüssen TRT1', TRT2' zwischengekoppelte galvanische Trennstrecke IP' von vorgebbarer Isolierfähigkeit.

Bei eingestellter erster Übertragungrichtung dient die Konvertierungsstufe SC1' dazu, das Digitalsignal txd1' in ein über die Trennstrecke IP' hinweg übertragungsfähiges, erstes Kopplungsignal txt1' am Kopplungssignal-Anschluß TRT1' und dient die Konvertierungsstufe SC2' dazu, ein am Kopplungssignal-Anschluß TRT2' angelegtes, über die Trennstrecke IP' hinweg übertragenes zweites Kopplungssignal rxt2' in das Digitalsignal rxd2' umzuwandeln. Bei eingestellter zweiter Übertragungrichtung dient die Konvertierungsstufe SC2' demgegenüber dazu, das Digitalsignal txd2' in ein über die Trennstrecke IP' hinweg übertragungsfähiges drittes Kopplungsignal txt2' am Kopplungssignal-Anschluß TRT2' und dient die Konvertierungsstufe SC1' dazu, ein am Kopplungssignal-Anschluß TRT1' angelegtes, über die Trennstrecke IP' hinweg übertragenes viertes Kopplungssignal rxt1' in das Digitalsignal rxd1' umzuwandeln.

In entsprechender Weise dient die galvanische Trennstrecke IP' neben dem bereits erwähnten Unterdrücken von Störsignalen dazu, bei eingestellter erster Übertragungsrichtung das Kopplungssignal txt1' in das Kopplungssignal rxt2' am Kopplungssignal-Anschluß TRT2' sowie bei eingestellter zweiter Übertragungsrichtung das Kopplungssignal txt2' in das Kopplungssignal rxt1' am Kopplunssignal-Anschluß TRT1' zu überführen.

Nach einer bevorzugten Ausgestaltung der zweiten Variante der Erfindung ist die Trennstrecke IP' in analoger Weise zur ersten Variante der Erfindung wiederum ein Übertrager-Luftspalt, der gemäß Fig. 6 zwischen einer als eine erste Übertrager-Wicklung dienenden Spule 2' der Konvertierungsstufe SC1' und einer als eine zweite Übertrager-Wicklung dienenden Spule 3' der Konvertierungsstufe SC2' ausgebildet ist; sie kann aber auch, wie bereits erwähnt, mittels eines in Isoliermaterial eingebetten Übertragers und/oder mittels nacheinandergeschalteten Übertragern realisiert sein.

Die Spule 2' liegt mit einem ersten Wicklungs-Anschluß 21' auf einem ersten Potential U₂₁' und mit einem zweiten Wicklungs-Anschluß 22' auf einem zweiten Potential U₂₂' und in in entsprechender Weise liegt die Spule 3' mit einem ersten Wicklungs-Anschluß 31' auf einem dritten Potential U₃₁' und mit einem zweiten Wicklungs-Anschluß 32' auf einem vierten Potential U₃₂'.
Nach einer weiteren Ausgestaltung der zweiten Variante der Erfindung gemäß Fig. 6 umfaßt die Konvertierungsstufe SC1' bei eingestellter erster Übertragungsrichtung eine Verzögerungsschaltung 4', die dazu dient, in der oben beschriebenene Weise ein vom Digitalsignal txd1' abgeleitetes und zu diesem phasenverschobenes Digitalsignal zu generieren. Dieses Digitalsignal wird an den Spulen-Anschluß 32' geführt und bewirkt somit eine Änderung des Potentials U₃₂'. Desweiteren ist das Digitalsignal txd1' an den Spulen-Anschluß 31' direkt angelegt, so daß über der Spule 3' wieder eine sich als eine Differenz U₃₁' - U₃₂' ergebende logisch-dreiwertige Spannung abfällt.

Als Verzögerungsschaltung 4' der Konvertierungsstufe SC1' können, wie bei der Konvertierungsstufe SC1, nicht-invertierende Laufzeitketten von vorgebbarer Signallaufzeit dienen.

Für den Fall, daß die Verzögerungsschaltung 4' im Betrieb des Übertragungskanals temporär ab- bzw. zuschaltbar sein soll, weist diese nach einem bevorzugten Ausführungsbeispiel wenigstens einen Tristate-Buffer 41' auf.

Ferner umfaßt die Konvertierungsstufe SC2' eine zumindest bei eingestellter erster Übertragungsrichtung aktivierte, dem Umwandeln des Kopplungssignals rxt2' in das Digitalsignal rxd2' dienende Kippschaltung 5' mit einem an den Spulen-Anschluß 31' gekoppelten Setz-Eingang und mit einem an den Digitalsignal-Anschluß RXD2' gekoppelten, insb. nicht-invertierenden, Ausgang, die im Betrieb mindestens einen stabilen Schaltzustand am Ausgang aufweist. In entsprechender Weise kann auch die Konvertierungsstufe SC1' bei eingestellter zweiter Übertragungsrichtung eine dem Umwandeln des Kopplungssignals rxt1' in das Digitalsignal rxd1' dienende Kippschaltung aufweisen.

Die Kippschaltung 5' dient wiederum dazu, bei einer einer positiven Flanke des Digitalsignals txd1' zugeordneten positiven Flanke des Kopplungssignals rxt1' einem Potential U_{RXD2}' am Digitalsignal-Anschluß RXD2' den Signalzustand H sowie bei einer einer negativen Flanke des Digitalsignals txd2' zugeordneten negativen Flanken des Kopplungssignals rxt2' dem Potential U_{RXD2}' den Signalzustand L zu zuweisen.

Wie aus dem Stand der Technik bekannt kann die zeitliche Änderung des Potentials U_{RXD2}' bei eingestellter erster Übertragungsrichtung dadurch realisiert werden, dass die Kippschaltung 5' der Konvertierungsstufe SC2' eine bistabile Kippschaltung ist, die zwei stabile Schaltzustände am Ausgang annimmt, vgl. z.B. DE-A 36 14 832, WO-A 89/12366; selbstverständlich kann auch die Konvertierungsstufe SC1' zur Änderung des Potentials U_{RXD2}' bei eingestellter zweiter Übertragungsrichtung eine bistabile Kippschaltung umfassen.

Hierbei kann der Tristate-Buffer 62', wie in Fig. 8 dargestellt, bei eingestellter erster Übertragungsrichtung als aktivierte bistabile Kippschaltung 5' der Konvertierungsstufe SC2' dienen. Dazu ist der Tristate-Buffer 62' als nicht-invertierender Tristate-Buffer auszuführen, dessen Eingang direkt an den Spulen-Anschluss 31' und dessen Ausgang direkt an den Spulen-Anschluss 32' angeschlossen sind. In entsprechender Weise kann auch bei dem erfindugsgemäßen Übertragungskanal ein nicht-invertierender Tristate-Buffer 64' , der mit seinem Eingang direkt an den Spulen-Anschluss 22' und mit seinem Ausgang direkt an den Spulen-Anschluss 21' angeschlossen ist, als aktivierbare bistabile Kippschaltung der SC1' dienen.

Nach einer anderen bevorzugten Ausgestaltung der Erfindung wird die zeitliche Änderung des Potentials U_{RXD2}' bei eingestellter erster Übertragungsrichtung dadurch realisiert, dass die Kippschaltung 5' der Konvertierungsstufe SC2' ebenfalls eine monostabile, also nur einen stabilen Schaltzustand am Ausgang aufweisende, Kippschaltung, insb. nach der Art der Kippschaltung 5 der ersten Variante der Erfindung gemäss Fig. 2, ist.

Bei der Verwendung der Kippschaltung 5 für die zweite Variante der Erfindung können die in der Fig. 2 gezeigten Inverter 51, 52 ebenfalls als invertierende Tristate-Buffer ausgeführt sein, die z.B. durch das Stellsignal rxa2' aktivierbar sind.

Mittels der deaktivierten bzw. aktivierten Digitalsignal-Anschlüsse TXD1', RXD1', TXD2', RXD2' werden die erste und die zweite Übertragungsrichtung so eingestellt, daß die Übertragung von Digitalsignalen, die einer nicht eingestellten Übertragungsrichtung entsprächen, blockiert werden würde. Um bei einem derartig realisierten Datenaustausch einen Datenverlust zu verhindern, sind die zu übertragenden Daten, z.B. in einem Schieberegister, zwischenzuspeichern und das Einstellen der Übertragungsrichtungen mit dem Aussenden der entsprechenden Digitalsignale in geeigneter Weise, z.B. zeitgetaktet und/oder ereignisgesteuert, abzustimmen. Dies kann z.B. im Master-Slave-Betrieb erfolgen.

Für das ereignisgesteuerte Einstellen der Übertragungsrichtungen mittels der Stellsignale rxa1', rxa2' dienen bei derartig betriebenen Übertragungskanälen entsprechene digitale Steuersignale, die, insb. nach einem standardisierten Schnittstellen-Protokoll, vorgegebene Steuerbit-Folgen aufweisen. Diese Steuersignale werden zur Generierung der Stellsignale rxa1', rxa2' den Digitalsignalen txd1', txd2' voraus- und ggf. nachgesendet und können dementsprechend auch über die Trennstecke hinweg übertragen werden.

Zur Erzeugung der Steuersignale sowie der Steilsignale rxa1', rxa2' können alle dem Fachmann bekannten Steuerungs-Schaltungen für einen derartigen seriellen Datenaustausch, wie z.B entsprechende BUS-Steuerungen oder Modemsteuerungen, sowie entsprechende, z.B. in einem Mikroprozessor implementierte, Steuerungs-Verfahren dienen; die Steuerschaltungen können z.B. direkt in den Übertragungskanal oder in wenigstens einer der Sende-Empfangseinheiten integriert sein. Für den Fall, daß der Übertragungskanal in einem BUS-System eingesetzt wird, ist jedem der Digitalsignal-Anschlüsse TXD1', RXD2', TXD2', RXD1' eine entsprechende unterscheidungsfähige BUS-Adresse zuzuweisen und in der oben erwähnten Steuerschaltung eine entsprechende Adressier-Steuerung vorzusehen. Desweiteren sind die Stellsignal-Anschlüsse RXA1', RXA2' an einen entsprechenden Adreß-BUS anzuschließen.

Die Steuersignale können z.B. mittels von der Steuerschaltung zusätzlich ausgehenden separaten Steuerleitungen geführt werden; die Steuersignale können aber auch, wie bei derartigen seriellen Schnittstellen durchaus üblich, als eine den eigentlichen Datenbits voran- und ggf. nachgestellte Steuerbit-Folge der zu übertragenden Digitalsignale ausgebildet sein und somit wie das entsprechende Digitalsignal dem Übertragungskanal zugeführt werden.

Nach einer weiteren bevorzugten Ausgestaltung der Erfindung dient der Übertragungskanal daher auch dazu digitale Steuersignale zwischen einer nicht dargestellten ersten und einer nicht dargestellten zweiten Steuerschaltung zu übertragen.

Nach einer anderen Ausgestaltung der zweiten Variante der Erfindung ist die erste Steuerschaltung mit den Digitalsignal-Anschlüssen TXD1', RXD1' und die zweite Steuerschaltung mit den Digitalsignal-Anschlüssen TXD2', RXD2' verbunden, wobei in einem Ausgangszustand des Übertragungskanals zunächst jeder der Digitalsignal-Anschlüsse TXD1', RXD2', TXD2', RXD1' aktiviert ist. Zu einem Zeitpunkt vor dem Anlegen des Digitalsignals txd1' ist dem Digitalsignal-Anschluß TXD1' ein zu übertragendes digitales erstes Steuersignal txc1' zugeführt, das dann in der oben beschriebenen Weise in ein am Digitalsignal-Anschluß RXD2' anliegendes übertragenes digitales zweites Steuersignal rxc2' überführt wird. Das Steuersignal rxc2' wird der zweiten Steuerschaltung zugeführt, die daraus das Stellsignal rxa2' und sowie ggf. ein zur ersten Steuerschaltung zu übertragendes weiteres digitales Steuersignal ableitet. In entsprechender Weise wird dem Digitalsignal-Anschluß TXD2' zu einem Zeitpunkt vor dem Anlegen des Digitalsignals txd2' ein zu übertragendes digitales drittes Steuersignal txc2' zugeführt, das in ein am Digitalsignal-Anschluß RXD1' anliegendes übertragenes digitales viertes Steuersignal rxc1' überführt wird. Das Steuersignal rxc1' wird der ersten Steuerschaltung zugeführt, die daraus das Stellsignal rxa1' und sowie ggf. ein zur zweiten Steuerschaltung zu übertragendes weiteres digitales Steuersignal ableitet.

Selbstverständlich kann der Übertragungskanal auch mit von den Steuerungen ausgehenden, separaten Steuerleitungen verbundene zusätzliche Steuersignal-Anschlüsse für die Steuersignale aufweisen. In entsprechender Weise können die Steuersignale dann auch weiteren Konvertierungsstufen zugeführt werden.

## Patentansprüche

1. Dem Übertragen von Digitalsignalen dienender Übertragungskanal mit einem ersten Digitalsignal-Anschluss (TXD1; TXD1') für ein zu übertragendes erstes Digitalsignal (txd1; txd1) und mit einem zweiten Digitalsignal-Anschluss (RXD2; RXD2') für ein übertragenes zweites Digitalsignal (rxd2; rxd2'), welcher Übertragungskanal umfasst:
- eine galvanische Trennstrecke (IP) von vorgebbarer Isolierfähigkeit, eine erste Konvertierungsstufe (SC1; SC1') mit einem Kopplungssignal-Anschluss (TRT1; TRT1') für ein über die Trennstrecke (IP) hinweg übertragungsfähiges erstes Kopplungssignal (txt1; txt1') sowie
- eine zweite Konvertierungsstufe (SC2; SC2') mit einem Kopplungssignal-Anschluss (TRT2; TRT2') für ein über die Trennstrecke (IP) hinweg übertragenes zweites Kopplungssignal (rxt2; rxt2'),
- wobei die Trennstrecke (IP) zwischen einer Spule (2; 2') der ersten Konvertierungsstufe (SC1; SC1') und einer Spule (3; 3') der zweiten Konvertierungsstufe (SC2; SC2') ausgebildet ist,
- wobei das erste Kopplungssignal (txt1; txt1') ein logisch-dreiwertiges Signal ist, und
- wobei die zweite Konvertierungsstufe (SC2; SC2') das zweite Kopplungsignal (rxt2; rxt2') in das zweite Digitalsignal (rxd2; rxd2') mittels einer monostabilen Kippschaltung (5, 5') überführt,
-- von der ein Setz-Eingang mit dem zweiten Kopplungssignal-Anschluss (TRT2; TRT2') und
-- von der ein Ausgang mit dem zweiten Digitalsignal-Anschluss (RXD2; RXD2') gekoppelt sind.

2. Übertragungskanal nach Anspruch 1, wobei die Kippschaltung (5; 5') umfasst:
- einen Kondensator (53) von vorgebbarer Kapazität,
-- mit einem ersten Kondensator-Anschluss (531) und
-- mit einem zweiten Kondensator-Anschluss (532),
- einen Widerstand (54) von vorgebbarem Widerstandswert, der
-- mit einem ersten Widerstands-Anschluss an den zweiten Kondensator-Anschluss (532) und
-- mit einem zweiten Widerstands-Anschluss an ein Bezugspotential (UB) angeschlossen ist
- einen erster Inverter (51), der
-- mit einem Inverter-Eingang an den ersten Spulen-Anschluss (31) der Spule (3; 3') der zweiten Konvertierungsstufe (SC2; SC2') und
-- mit einem Inverter-Ausgang an den ersten Kondensator-Anschluss (531) angeschlossen ist und
- einen zweiter Inverter (52), der
-- mit einem Inverter-Eingang an den zweiten Kondensator-Anschluss (532) und
-- mit einen Inverter-Ausgang mit dem zweiten Spulen-Anschluss (32) der Spule (3; 3') der zweiten Konvertierungsstufe (SC2; SC2') angeschlossen ist.

3. Übertragungskanal nach einem der vorherigen Ansprüche, wobei die erste Konvertierungsstufe (SC1; SC1') eine Verzögerungsschaltung (4; 4') von vorgebbarer Signallaufzeit mit einem Eingang, dem das erste Digitalsignal (txd1; txd1') zugeführt ist, und mit einem an den zweiten Spulen-Anschluss (22; 22') der Spule (2; 2') der ersten Konvertierungsstufe (SC1; SC1') gekoppelten Ausgang umfasst.

4. Übertragungskanal nach Anspruch 3, wobei die Verzögerungsschaltung (4') einen Tristate-Buffer (41) umfasst.

5. Übertragungskanal nach einem der vorherigen Ansprüche, wobei das erste Kopplungssignal eine über der Spule (2; 2') der ersten Konvertierungsstufe (SC1; SC1') abfallende Spannung (ΔU2; ΔU2') ist.

6. Übertragungskanal nach Anspruch 1, geeignet zum Übertragen von Digitalsignalen in einer während des Betriebes einstellbaren ersten Übertragungsrichtung oder in einer während des Betriebes einstellbaren zweiten Übertragungsrichtung, welcher Übertragungskanal einen deaktivierbaren ersten Digitalsignal-Anschluss (TXD1') für ein zu übertragendes erstes Digitalsignal (txd1'), einen deaktivierbaren zweiten Digitalsignal-Anschluss (RXD2') für ein übertragenes zweites Digitalsignal (rxd2'), einen deaktivierbaren dritten Digitalsignal-Anschluss (TXD2') für ein zu übertragendes drittes Digitalsignal (txd2') und einen deaktivierbaren vierten Digitalsignal-Anschlulss (RXD1') für ein übertragenes viertes Digitalsignal (rxd1') umfaßt,
- wobei bei eingestellter erster Übertragungsrichtung
-- sowohl der erste Digitalsignal-Anschluss (TXD1') als auch der zweite Digitalsignal-Anschluss (RXD2') aktiviert und sowohl der dritte Digitalsignal-Anschluss (TXD2') als auch der vierte Digitalsignal-Anschluss (RXD1') deaktiviert sind und
-- am Kopplungssignal-Anschluss (TRT1') der ersten Konvertierungsstufe (SC1') das über die Trennstrecke (IP') hinweg übertragungsfähiges erste Kopplungssignal (txt1') und am Kopplungssignal-Anschluss (TRT2') der zweiten Konvertierungsstufe (SC2') das über die Trennstrecke (IP') hinweg übertragene zweite Kopplungssignal (rxt2') anliegen, und
- wobei bei eingestellter zweiter Übertragungsrichtung
-- sowohl der erste Digitalsignal-Anschluss (TXD1') als auch der zweite Digitalsignal-Anschluss (RXD2') deaktiviert und sowohl der dritte Digitalsignal-Anschluss (TXD2') als auch der vierte Digitalsignal-Anschluss (RXD1') aktiviert sind und
-- am Kopplungssignal-Anschluss (TRT2') der zweiten Konvertierungsstufe (SC2') ein über die Trennstrecke (IP') hinweg übertragungsfähiges drittes Kopplungssignal (txt2') und am Kopplungssignal-Anschluss (TRT1') der ersten Konvertierungsstufe (SC1') ein über die Trennstrecke (IP') hinweg übertragenes viertes Kopplungssignal (rxt1') anliegen.

7. Übertragungskanal nach Anspruch 6, der weiters umfasst:
einen ersten Stellsignal-Anschluss (RXA1') für ein der Deaktivierung des ersten Digitalsignal-Anschlusses (TXD1') oder der Deaktivierung des dritten Digitalsignal-Anschlusses (RXD1') dienendes erstes Stellesignal (rxa1') und
einen zweiten Stellsignal-Anschluss (RXA2') für ein der Deaktivierung des zweiten Digitalsignal-Anschlusses (RXD2') oder der Deaktivierung des vierten Digitalsignal-Anschlusses (TXD2') dienendes zweites Steilsignal (rxa2').

8. Übertragungskanal nach Anspruch 6 oder 7, weiters umfassend:
- einen mit einem Eingang an den ersten Digitalsignal-Anschluss (TXD1') gekoppelten abschaltbaren ersten Tristate-Buffer (61'),
- einen mit einem Ausgang an den zweiten Digitalsignal-Anschluss (RXD2') gekoppelten abschaltbaren zweiten Tristate-Buffer (62') und
- einen mit einem Eingang an den dritten Digitalsignal-Anschluss (TXD2') gekoppelten abschaltbaren dritten Tristate-Buffer (63') und
- einen mit einem Ausgang an den vierten Digitalsignal-Anschluss (RXD1') gekoppelten abschaltbaren vierten Tristate-Buffer (64'),
- wobei bei eingestellter erster Übertragungsrichtung
-- der erste und der zweite Tristate-Buffer (61', 62') einen niederohmigen Zustand sowie
-- der dritte und der vierte Tristate-Buffer (63', 64') einen hochohmigen Zustand aufweisen und
- wobei bei eingestellter zweiter Übertragungsrichtung
-- der erste und der zweite Tristate-Buffer (61', 62') einen hochohmigen Zustand sowie
-- der dritte und der vierte Tristate-Buffer (63', 64') einen niederohmigen Zustand aufweisen.

## Claims

1. A transmission channel, which transmits digital signals, with a first digital signal connection (TXD1; TXD1') for a first digital signal to be transmitted (txd1; txd1), and with a second digital signal connection (RXD2; RXD2') for a second transmitted digital signal (rxd2; rxd2'), said transmission channel comprising:
- a galvanic isolating distance (IP) of a pre-specifiable insulating power, a first conversion stage (SC1; SC1') with a coupling signal connection (TRT1; TRT1') for a first coupling signal (txt1; txt1') which can be transmitted beyond the isolating distance (IP) and
- a second conversion stage (SC2; SC2') with a coupling signal connection (TRT2; TRT2') for a second coupling signal (rxt2; rxt2') transmitted beyond the isolating distance (IP),
- where the isolating distance (IP) is formed between a coil (2; 2') of the first conversion stage (SC1; SC1') and a coil (3; 3') of the second conversion stage (SC2; SC2')
- where the first coupling signal (txt1; txt1') is a logical three-level signal and
- where the second conversion stage (SC2; SC2') converts the second coupling signal (rxt2; rxt2') to the second digital signal (rxd2; rxd2') with a monostable circuit (5; 5')
-- from which a set input is coupled with the second coupling signal connection (TRT2; TRT2')
-- from which an output is coupled with the second digital signal connection (RXD2; RXD2').

2. Transmission channel as per Claim 1 where the flip-flop circuit (5; 5') comprises:
- a capacitor (53) of a pre-specifiable capacitance
- with a first capacitor connection (531) and
- with a second capacitor connection (532)
- a resistor (54) of a pre-specifiable resistance, where
- the first resistor connection is connected to the second capacitor connection (532)
- the second resistor connection is connected to a reference potential (UB)
- a first inverter (51), which
- is connected to the first coil connection (31) of the coil (3; 3') of the second conversion stage (SC2; SC2') with an inverter input
-- and is connected to the first capacitor connection (531) with an inverter output and
-- a second inverter (52), which
-- is connected to the second capacitor connection (532) with an inverter input and
-- is connected to the second coil connection (32) of the coil (3; 3') of the second conversion stage (SC2; SC2') with an inverter output

3. Transmission channel as per one of the previous claims where the first conversion stage (SC1; SC1') comprises a delay circuit (4; 4') of a pre-specifiable signal propagation time with an input to which the first digital signal (txd1; txd1') is supplied, and with an output coupled to the second coil connection (22; 22') of the coil (2; 2') of the first conversion stage (SC1; SC1').

4. Transmission channel as per Claim 3 where the delay circuit (4') comprises a tri-state buffer (41).

5. Transmission channel as per one of the previous claims, where the first coupling signal is a voltage (ΔU2; ΔU2') dropping over the coil (2; 2') of the first conversion stage (SC1; SC1').

6. Transmission channel as per Claim 1, which is suitable for transmitting digital signals in a first transmission direction, which can be set during operation, or in a second transmission direction, which can be set during operation, said transmission channel comprising a deactivatable first digital signal connection (TXD1') for a first digital signal (txd1') to be transmitted, a deactivatable second digital connection (RXD2') for a second transmitted digital signal (rxd2'), a deactivatable third digital signal connection (TXD2') for a third digital signal (txd2') to be transmitted and a deactivatable fourth digital signal connection (RXD1') for a fourth transmitted digital signal (rxd1'),
- where, if the first transmission direction is set,
-- both the first digital signal connection (TXD1') and second digital signal connection (RXD2') are activated and both the third digital signal connection (TXD2') and the fourth digital signal connection (RXD1') are deactivated and
-- the first coupling signal (txt1'), which can be transmitted beyond the isolating distance (IP'), is present at the coupling signal connection (TRT1') of the first conversion stage (SC1'), and the second coupling signal (rxt2') transmitted beyond the isolating distance (IP') is present at the coupling signal connection (TRT2') of the second conversion stage (SC2') and
- where, if the second transmission direction is set,
-- both the first digital signal connection (TXD1') and the second digital signal connection (RXD2') are deactivated and both the third digital signal connection (TXD2') and the fourth digital signal connection (RXD1') are activated and
-- a third coupling signal (txt2'), which can be transmitted beyond the isolating distance (IP') is present at the coupling signal connection (TRT2') of the second conversion stage, and a fourth coupling signal (rxt1') transmitted beyond the isolating distance (IP') is present at the coupling signal connection (TRT1') of the first conversion stage (SC1').

7. Transmission channel as per Claim 6, further comprising:
- a first control signal connection (RXA1') for a first control signal (rxa1'), for deactivating the first digital signal connection (TXD1') or for deactivating the third digital signal connection (RXD1') and
- a second control signal connection (RXA2') for a second control signal (rxa2') for deactivating the second digital signal connection (RXD2') or for deactivating the fourth digital signal connection (TXD2').

8. Transmission channel as per Claim 6 or 7, further comprising:
- a first tri-state buffer (61'), which can be switched off and is coupled to the first digital signal connection (TXD1') with an input
- a second tri-state buffer (62'), which can be switched off and is coupled to the second digital signal connection (RXD2') with an output
- a third tri-state buffer (63'), which can be switched off and is coupled to the third digital signal connection (TXD2') with an input
- a fourth tri-state buffer (64'), which can be switched off and is coupled to the fourth digital signal connection (RXD1') with an output
- where, if the first transmission direction is set,
-- the first and second tri-state buffers (61', 62') exhibit a low impedance state
-- the third and fourth tri-state buffers (63', 64') exhibit a high impedance state
-- where, if the second transmission direction is set,
-- the first and second tri-state buffers (61', 62') exhibit a high impedance state
-- the third and fourth tri-state buffers (63', 64') exhibit a low impedance state

## Revendications

1. Canal de transmission servant à la transmission de signaux numériques avec une première connexion de signal numérique (TXD1, TXD1') pour un premier signal numérique (txd1, txd1') à transmettre et avec une deuxième connexion de signal numérique (RXD2, RXD2') pour un deuxième signal numérique (rxd2, rxd2') transmis, lequel canal de transmission comprend :
- une distance d'isolement galvanique (IP) d'une capacité d'isolement prédéfinie, un premier étage de conversion (SC1, SC1') avec une connexion de signal de couplage (TRT1, TRT1') pour un premier signal de couplage (txt1, txt1') pouvant être transmis au-delà de la distance d'isolement (IP), ainsi que
- un deuxième étage de conversion (SC2, SC2') avec une connexion de signal de couplage (TRT2, TRT2') pour un deuxième signal de couplage (rxt2, rxt2') pouvant être transmis au-delà de la distance d'isolement (IP)
- la distance d'isolement (IP) étant formée entre une bobine (2, 2') du premier étage de conversion (SC1, SC1') et une bobine (3, 3') du deuxième étage de conversion (SC2, SC2'),
- le premier signal de couplage (txt1, txt1') étant un signal logique trivalent, et
- le deuxième étage de conversion (SC2, SC2') transmettant le deuxième signal de couplage (rxt2, rxt2') au deuxième signal numérique (rxd2, rxd2') au moyen d'une bascule monostable,
- à partir de laquelle une entrée de mise à un est couplée avec la deuxième connexion de signal de couplage (TRT2, TRT2') et
- à partir de laquelle une sortie est couplée avec la deuxième connexion de signal numérique (RXD2, RXD2').

2. Canal de transmission selon la revendication 1, pour lequel la bascule (5, 5') comprend :
- un condensateur (53) d'une capacité prédéfinissable,
-- avec une première connexion de condensateur (531) et
-- avec une deuxième connexion de condensateur (532),
- une résistance (54) d'une valeur de résistance prédéfinissable,
-- dont la première connexion de résistance est connectée à la deuxième connexion de condensateur (532) et
-- dont la deuxième connexion de résistance est connectée à un potentiel de référence (UB)
- un premier inverseur (51), lequel
-- est raccordé avec une entrée d'inverseur à la première connexion de bobine (31) de la bobine (3, 3') du deuxième étage de conversion (SC2, SC2') et
-- avec une sortie d'inverseur à la première connexion de condensateur (531) et
- un deuxième inverseur (52), lequel
-- est raccordé avec une entrée d'inverseur à la deuxième connexion de condensateur (532) et
-- avec une sortie d'inverseur à la deuxième connexion de bobine (32) de la bobine (3, 3') du deuxième étage de conversion (SC2, SC2').

3. Canal de transmission selon l'une des revendications précédentes, pour lequel le premier étage de conversion (SC1, SC1') comprend un circuit de temporisation (4, 4') d'une durée d'activation de signal prédéfinissable, avec une entrée, à laquelle est acheminé le premier signal numérique (txd1, txd1') et avec une sortie couplée à la deuxième connexion de bobine (22, 22') de la bobine (2, 2') du premier étage de conversion (SC1, SC1').

4. Canal de transmission selon la revendication 3, pour lequel le circuit de temporisation (4') comprend un tampon à trois états (41).

5. Canal de transmission selon l'une des revendications précédentes, pour lequel le premier signal de couplage est une tension (ΔU2, ΔU2') décroissante via la bobine (2, 2') du premier étage de conversion (SC1, SC1').

6. Canal de transmission selon la revendication 1, convenant pour la transmission de signaux numériques dans un premier sens de transmission réglable pendant le fonctionnement ou dans un deuxième sens de transmission réglable pendant le fonctionnement, lequel canal de transmission comprend une première connexion de signal numérique (TXD1') désactivable pour un premier signal numérique (txd1') à transmettre, une deuxième connexion de signal numérique (RXD2') désactivable pour un deuxième signal numérique (rxd2') à transmettre, une troisième connexion de signal numérique (TXD2') désactivable pour un troisième signal numérique (txd2') à transmettre et une quatrième connexion de signal numérique (RXD1') désactivable pour un quatrième signal numérique (rxd1') à transmettre,
- pour lequel, le premier sens de transmission étant configuré,
-- aussi bien la première connexion de signal numérique (TXD1') que la deuxième connexion de signal numérique (RXD2') sont activées et aussi bien la troisième connexion de signal numérique (TXD2') que la quatrième connexion de signal numérique (RXD1') sont désactivées et
-- au niveau de la connexion de signal de couplage (TRT1') du premier étage de conversion (SC1') est présent le premier signal de couplage (txt1') transmissible au-delà de la distance d'isolement (IP') et au niveau de la connexion de signal de couplage (TRT2') du deuxième étage de conversion (SC2') est présent le deuxième signal de couplage (rxt2') transmis au-delà de la distance d'isolement (IP'), et
- pour lequel, le deuxième sens de transmission étant configuré,
-- aussi bien la première connexion de signal numérique (TXD1') que la deuxième connexion de signal numérique (RXD2') sont désactivées et aussi bien la troisième connexion de signal numérique (TXD2') que la quatrième connexion de signal numérique (RXD1') sont activées et
-- au niveau de la connexion de signal de couplage (TRT2') du deuxième étage de conversion (SC2') est présent le troisième signal de couplage (txt2') transmissible au-delà de la distance d'isolement (IP') et au niveau de la connexion de signal de couplage (TRT1') du premier étage de conversion (SC1') est présent le quatrième signal de couplage (rxt1') transmis au-delà de la distance d'isolement (IP').

7. Canal de transmission selon la revendication 6, comprenant en outre :
- une première connexion de signal de réglage (RXA1') pour un premier signal de réglage (rxa1') servant à la désactivation de la première connexion de signal numérique (TXD1') ou à la désactivation de la troisième connexion de signal numérique (RXD1') et une deuxième connexion de signal de réglage (RXA2') pour un deuxième signal de réglage (rxa2') servant à la désactivation de la deuxième connexion de signal numérique (RXD2') ou à la désactivation de la quatrième connexion de signal numérique (TXD2').

8. Canal de transmission selon la revendication 6 ou 7, comprenant en outre :
- un premier tampon à trois états (61') désactivable, couplé avec une entrée à la première connexion de signal numérique (TXD1'),
- un deuxième tampon à trois états (62') désactivable, couplé avec une sortie à la deuxième connexion de signal numérique (RXD2'),
- un troisième tampon à trois états (63') désactivable, couplé avec une entrée à la troisième connexion de signal numérique (TXD2'),
- un quatrième tampon à trois états (64') désactivable, couplé avec une sortie à la quatrième connexion de signal numérique (RXD1'),
- pour lequel, le premier sens de transmission étant configuré,
-- le premier et le deuxième tampon à trois états (61', 62') présentent un état de basse impédance ainsi que
-- le troisième et le quatrième tampon à trois états (63', 64') présentent un état de haute impédance et
- pour lequel, le deuxième sens de transmission étant configuré,
-- le premier et le deuxième tampon à trois états (61', 62') présentent un état de haute impédance ainsi que
-- le troisième et le quatrième tampon à trois états (63', 64') présentent un état de basse impédance.
